Europäisches Patentamt

European Patent Office

Office européen des brevets

(19)

(11) Veröffentlichungsnummer : **0 400 391 B1**

(12)

# EUROPÄISCHE PATENTSCHRIFT

(45) Veröffentlichungstag der Patentschrift :
20.01.93 Patentblatt 93/03

(51) Int. Cl.$^5$ : **C08L 95/00**

(21) Anmeldenummer : **90109087.8**

(22) Anmeldetag : **15.05.90**

(54) **Polymermodifiziertes Bitumen.**

(30) Priorität : **01.06.89 DE 3917815**

(43) Veröffentlichungstag der Anmeldung :
**05.12.90 Patentblatt 90/49**

(45) Bekanntmachung des Hinweises auf die
Patenterteilung :
**20.01.93 Patentblatt 93/03**

(84) Benannte Vertragsstaaten :
**AT BE CH DE DK ES FR GB IT LI NL SE**

(56) Entgegenhaltungen :
**WO-A-88/07067**
**GB-A- 1 177 425**

(73) Patentinhaber : **Röhm GmbH**
**Kirschenallee Postfach 4242**
**W-6100 Darmstadt 1 (DE)**

(72) Erfinder : **Müller, Michael, Dr.**
**Pater-Delp-Str. 32**
**W-6140 Bensheim 3 (DE)**
Erfinder : **Pennewiss, Horst, Dr.**
**De-La-Fosse-Weg 21**
**W-6100 Darmstadt-Neu-Kranichstein (DE)**
Erfinder : **Gebhardt, Jürgen**
**Untergasse 11a**
**W-6117 Schaafheim (DE)**

EP 0 400 391 B1

## Beschreibung

Gebiet der Erfindung

Die Erfindung betrifft Polymere auf Polyalkyl(meth)acrylat-Basis als Bitumenverbesserungsmittel und mit solchen Polymeren modifizierte Bitumina mit verbesserten technischen Eigenschaften.

Stand der Technik

Bitumen, das ein Gemisch von im wesentlichen verschiedenen Kohlenwasserstoffen, mit schwankenden Anteilen an paraffinischen, naphthenischen und aromatischen Kohlenwasserstoffen ist, wird auf Grund seiner Eigenschaften vielfältig verwendet, so für die Herstellung von Straßenbelägen, als Vergußmassen, im Bautenschutz als Anstrichstoffe oder in Form von Dachpappen sowie als Abdichtungsmittel gegen Grundwasser.

Infolge der spezifischen Produkteigenschaften - Bitumina besitzen generell keine elastischen Eigenschaften - verspröden damit hergestellte Beläge bei niedrigen Temperaturen und erweichen bei höheren Temperaturen.

Durch Zusatz verschiedener Additive, insbesondere von Polymeren, wird versucht, eine Vergütung der Bitumina, insbesondere eine Verbesserung der rheologischen Eigenschaften zu erreichen, die z.B. dem Asphalt, einem Bitumen-Mineralstoff-Gemisch, vornehmlich für den Straßenbau, eine ausreichende Stabilität und Kälteflexibilität sowie eine hohe Dauerfestigkeit bei ständig steigenden Verkehrsbelastungen geben sollen. So kann der Polymerzusatz die sogenannte Plastizitätsspanne vergrößern, d.i. die Differenz zwischen Erweichungspunkt und Brechpunkt. Eine Absenkung des Brechpunktes (DIN 52 012) und eine Erhöhung der Duktilität (DIN 52 013) durch Polymerzusatz zeigen bessere Kälteflexibilität an. Der Zweck der Polymeren als Bitumenadditive ist die Veränderung des elastoviskosen Verhaltens von Bitumen, das heißt die Erweiterung seiner Plastizitätsspanne und Verbesserung der elastischen Rückstellung.

Neben Natur- und Synthesekautschuken wurden als Polymere, Duroplastharze und Thermoplaste als Bitumenverbesserer geprüft (Körner et al, Plaste und Kautschuk 24 (1977), 475 - 478). Als Polymer-Bitumenzusätze werden derzeit vor allem Styrol/Butadien (SB)-, EPDM- und Ethylen/Vinylacetat (EVA)-Copolymere und insbesondere für Industriebitumen, auch ataktisches Polypropylen technisch verwendet. Marktgängige polymermodifizierte Bitumina sind u.a. ® Caribit (SB, Shell), ® Olexobit (EPDM, BP), ® Styrelf (SB, Elf).

Auch Polymere auf Acrylsäureester- und Methacrylsäureester-Basis, insbesondere Polymere von Alkylmethacrylsäureestern (PAMA) sind als Bitumenverbesserungsmittel beschrieben. Eine breitere technische Verwendung haben diese Polymeren, trotz guter Erfüllung einer Reihe gestellter Anforderungen als Zusätze, vor allem wegen unzureichender Verbesserung der elastischen Rückstellung gebrauchsfertiger elastomermodifizierter Bitumina, bisher nicht gefunden.

Die US-Patentschrift 2 420 082 beschreibt bituminöse Mischungen aus Bitumen und 2 bis 5 % Poly-$C_8$-$C_{10}$-alkylmethacrylaten, ohne spezifische Angaben zu deren Molekulargewichten, wodurch die Duktilität des Bitumens verbessert wird.

Auch die US-Patentschrift 2 848 429 beschreibt durch Zusatz von je 0,01 bis 0,5 % Kautschuk und Poly-$C_8$-$C_{24}$-alkyl(meth)acrylaten erhaltene bituminöse Mischungen mit verbesserter Duktilität. Die PAMA's haben Molekulargewichte von 5 000 bis 500 000.

Die deutschen Patentschriften DE-AS 12 40 773 und DE-OS 23 31 727 beschreiben ebenso mit Polymeren von Alkylmethacrylaten, ohne nähere und spezifische Angaben über diese Polymeren zu machen, verbesserte bituminöse Bindemittel für Straßendecken.

Weiter werden Polalkyl(meth)acrylate bzw. Copolymerisate von Alkyl(meth)acrylaten als Bitumenverbesserungsmittel vorgeschlagen, in der DE-OS 25 09 473 ein festes Mischpolymerisat mit Molekulargewichten von 50 000 bis 500 000, in der japanischen Patent-Offenlegungsschrift 52-141 829 stufenweise emulsionspolymerisierte Zusätze und in der WO 88/07 067 Poly-$C_4$-$C_{20}$-alkylmethacrylate mit Molekulargewichten von etwa 5 000 bis etwa 1 000 000, und die in Mengen von 0,01 bis etwa 10 Gew.-% in dem modifizierten Bitumen enthalten sind.

Voraussetzungen an die polymeren Additive für die Nutzung der Eigenschaftsverbesserungen in bituminösen Gemischen sind Oxidations- und Thermostabilität der Polymeren, ihre leichte Einarbeitbarkeit im Bitumen, die Kompatibilität mit unterschiedlichen Bitumensorten und die Stabilität der Bitumen-Polymer-Mischung.

Die bekannten polymeren Bitumenadditive verbessern in ausreichendem Maße die Kälteflexiblität in bituminösen Gemischen und in damit hergestellten Mineralabmischungen, d.h. Brechpunkt und Duktilität solcher Materialien werden durch die bekannten Polymerzusätze günstig beeinflußt.

Hohe Dauerfestigkeit und Elastizität der mit bituminösen Bindemitteln hergestellten Asphalte, welche durch die elastischen Eigenschaften der Bitumina bestimmt werden, sind, wie beispielsweise in der Praxis zum Teil stark verformte Asphalt-Straßendecken zeigen, in noch nicht genügenden bzw. guten Maßen vorhanden.

Aufgabe und Lösung

Es stellte sich daher die Aufgabe, Polymere zu finden, die beiVerwendung in Bitumenabmischungen, die elastischen Eigenschaften, gemessen z.B. als elastische Rückstellung, von Bitumen-Zubereitungen deutlich verbessern, und die weiter die bekannten und erforderlichen Voraussetzungen, wie hohe Thermostabilität und Oxidationsbeständigkeit, sowie gute Einarbeitbarkeit und Kompatibilität aufweisen.

Es wurde gefunden, daß Polyalkyl(meth)acrylate bestimmter Struktur und Zusammensetzung wirksame Bitumenzusätze sind, die sowohl Kälteflexibiltät, wie in ganz besonderem Maße die elastischen Eigenschaften des Bitumens und damit bituminöser Zusammensetzungen verbessern.

Überraschenderweise ergab sich, daß zur Erreichung hoher Elastizität des polymermodifizierten Bitumens Polyalkyl(meth)acrylate langkettiger Alkylester sehr hohen Molekulargewichts nötig sind.

Die Erfindung betrifft daher polymermodifiziertes Bitumen mit verbesserter elastischer Rückstellung durch einen Gehalt von 0,5 bis 20 Gew.-% an Polymerbestandteilen,

dadurch gekennzeichnet,

daß der gegebenenfalls aus verschiedenen Polymerisaten bestehende Polymerzusatz ein Homo- bzw. Copolymer ist, das in Mengen von 20 bis 100 Gew.-% aus einem Polyalkyl(meth)acrylat besteht, das in Anteilen von 50 bis 100 Gew.-% aus $C_8$- bis $C_{26}$-Alkyl(meth)acrylaten, in Mengen von 0 bis 30 Gew.-% aus $C_1$- bis $C_7$-Alkyl(meth)acrylaten und in Mengen von 0 bis 20 Gew.-% aus weiteren Monomeren, insbesondere solchen mit funktionellen Gruppen aufgebaut ist und ein Molekulargewicht Mw > $10^6$, entsprechend einer Viskositätszahl $n_{sp/c}$ > 120 ml/g, gemessen in Chloroform bei 20 Grad C, hat.

Die Polyalkyl(meth)acrylate können sowohl als Lösung z.B. in einem geeigneten Mineralöl, als wäßrige Emulsion oder in reiner Form dem Bitumen zugesetzt werden.

Zwar läßt sich, wie aus dem Stand der Technik bekannt, durch Zusatz von Polyalkyl(meth)acrylaten, welche Molekulargewichte im Bereich von etwa 500 000 bis etwa 1 000 000 haben, in polymermodifizierten Bitumina die Kälteflexibilität, was in den Kenndaten von Brechpunkt und Duktilität zum Ausdruck gebracht wird, verbessern, in nicht ausreichendem Maße jedoch die elastische Rückstellung, wodurch bleibende Verformungen z.B. in Straßenbelägen hingenommen werden müssen, die ihrerseits hohe verfahrenssicherheitstechnische Risiken in sich bergen.

Beispielsweise stellt die Spezifikation der technischen Lieferbedingungen für gebrauchsfertige Polymermodifizierte Bitumen, TI PmB 88, Teil 1, Fassung vom 30.12.1988, bei verschiedenen PmB-Sorten Anforderungen an die elastische Rückstellung von mindestens 50 %. Die (Vergleichs)beispiele belegen die geringere elastische Ruckstellung bei Verwendung von Polyalkyl(meth)acrylaten mit Molekulargewichten Mw unter 1 000 000 und die erheblich höheren Werte in den erfindungsgemäßen PmB's. Der Aufbau des erfindungsgemäßen Polymerzusatzes aus (Meth)acrylsäureestern gewährt gute Thermostabilität, gute Oxidationsbeständigkeit und gute Löslichkeit, d.h. auch leichte Einarbeitbarkeit und Kompatibilität in allen Bitumensorten.

Durchführung der Erfindung.

Für die Herstellung des erfindungsgemäß zu verwendenden Polyalkyl(meth)acrylats werden langkettige Alkylester der Acrylsäure und/oder vor allem der Methacrylsäure mit $C_8$-bis $C_{26}$-, vorteilhaft mit $C_{10}$- bis $C_{20}$-Alkylresten, vor allem mit $C_8$- bis $C_{18}$-Alkylresten in der Estergruppe als Monomere verwendet. Beispiele für solche Ester sind n-Octylmethacrylat, 2-Ethylhexylacrylat, 2-Ethylhexylmethacrylat, n-Decylmethacrylat, Isodecylacrylat, Isodecylmethacrylat, Dodecylacrylat, Octadecylacrylat, Octadecylmethacrylat, Eicosylmethacrylat, Tricosylmethacrylat, wobei die für die Esterherstellung verwendeten langkettigen Alkohole bevorzugt als synthetische Alkohole eingesetzt werden, und welche Gemische verschiedener Alkohole im $C_8$- bis $C_{26}$-Bereich darstellen. Solche Alkohole sind im Handel beispielsweise unter den Markennamen ® Lorol, ® Alfol, ® Dobanol, ® Behenyl-SR bekannt. Ein beispielsweise für die Herstellung von Isodecylmethacrylat brauchbarer technischer Alkohol ist ein Gemisch aus isomeren Isodecylalkoholen mit einer mittleren C-Zahl $(\overline{C})$ = 9,9 -10,3.

Die Bitumen-modifizierenden Polyalkyl(meth)acrylate sind aus 50 bis 100 Gew.-%, vor allem aus 60 bis 100 Gew.-% und insbesondere aus 80 bis 100 Gew.-% der langkettigen $C_8$-bis $C_{26}$-Alkylester der Acrylsäure und/oder vor allem der Methacrylsäure aufgebaut, wobei diese bevorzugt auch Gemische verschiedener $C_8$- bis $C_{26}$-Alkylester sein können.

Neben diesen essentiell für die Erfindung notwendigen Monomeren, können für die Herstellung der Polyalkyl(meth)acrylate auch noch weitere Monomere, vor allem Acrylsäure- und/oder Methacrylsäureester von $C_1$- bis $C_7$-Alkoholen, wie Methylmethacrylat, Isobutylmethacrylat, n-Butylacrylat, Isoamylmethacrylat, n-Hexylacrylat in Mengen von 0 bis 30 Gew.-%, vor allem in Mengen von 0 bis 20 Gew.-%, und in Mengen von 0 bis 20 Gew.-%, vor allem in Mengen von 0 bis 10 Gew.-% weitere copolymerisierbare Verbindungen, insbesondere solche mit funktionellen Gruppen, wie Acrylsäure, Methacrylsäure, Maleinsäure oder deren Anhydrid, N-Dimethylaminoethylmethacrylat oder dessen quaternären Derivate, N-Vinylimidazol, aber auch Monomere wie Styrol, Vinylacetat, Acrylnitril, Acrylamide, Methacrylamide, mitverwendet werden.

Zur Einarbeitung der die elastische Rückstellung verbessernden Polymeren in die Bitumina, lassen sich dieselben als Lösung, vor allem als solche in einem geeigneten Mineralöl, z.B. einem höher-viskosen naphthenbasischen Schmieröl, als wäßrige Emulsion oder in reiner Form dem Bitumen zusetzen. Die Herstellung der Polyalkyl(meth)acrylate kann daher nach den üblichen Verfahren durch vornehmlich radikalische Polymerisation der Monomeren in Lösung oder in Emulsion aber auch in Substanz vorgenommen werden (vgl. H. Rauch-Puntigam, Th. Völker, Acryl- und Methacrylverbindungen, Springer-Verlag, Berlin, 1967, insbesondere Seiten 203, 207, 230 - 233, 238, 327). Die Molekulargewichtseinstellung, die für die erfindungsgemäß zu verwendenden Polyalkyl(meth)acrylate über $10^6$, insbesondere $> 1,05 \cdot 10^6$ sein soll, wird vor allem durch die Menge des die Polymerisation auslösenden Initiators im Verhältnis zu den polymerisierbaren Monomeren bestimmt und wird nach bekannten Methoden vorgenommen durchgeführt. Die Molekulargewichte Mw in g/mol der erhaltenen Polymerisate sind nach der Methode der Lichtstreuung (s. dazu Ullmanns Encyklopädie der technischen Chemie, 4. Auflage, Band 15, Seiten 385 bis 387) bestimmt und ihre Viskositäten nach DIN 7745 mit Chloroform als Lösungsmittel bei 20 Grad C gemessen.

Den Bitumina wird zur erfindungsgemäßen Modifizierung, Polyalkyl(meth)acrylat mit Molekulargewichten von $> 10^6$ in Mengen von 0,5 bis 20 Gew.-%, vor allem in Mengen von 1 bis 10 Gew.-% und insbesondere in Mengen von 2 bis 8 Gew.-% zugesetzt. Neben den Polyalkyl(meth)acrylaten können die erfindungsgemäßen polymermodifzierten Bitumina, andere als Veredelungskomponenten für bituminöse Bindemittel und Gemische bekannte polymere Verbindungen, wie beispielsweise Polyolefine (Polyethylen, Polypropylen), Ethylen-Vinylacetat-Copolymere oder Acrylnitril-Butadien-Styrol-Copolymere, enthalten.

Unter Bitumen werden im Sinne der vorliegenden Erfindung alle z.B. im Straßenbau oder im Dachbahnenbau, als Verguß-, Dichtungs- oder Anstrichmassen gebräuchlichen Bitumen, sowie Teer oder Asphalte verstanden.

BEISPIELE

Beispiel 1

Herstellung eines Poly-n-decylmethacrylates

160 g n-Decylmethacrylat und 40 g n-Octan wurden in einem 500 ml-Vierhalskolben mit Innenthermometer, Säbelrührer und Rückflußkühler vorgelegt und mittels eines Ölbades auf 85 Grad C erhitzt. Nach Erreichen dieser Temperatur wurde durch Einleiten von $N_2$ entgast, dann wurden 0,32 g t-Butylperoctoat zugegeben. Nach 70 Minuten wurde mit 28,6 g n-Octan verdünnt und nach weiteren 4 Stunden wurden erneut 0,32 g t-Butylperoctoat zugegeben. Nach insgesamt 16 Stunden Polymerisationsdauer wurde das Polymethacrylat durch Eingießen der Octanlösung in Ethanol gefällt und anschließend getrocknet.
$\eta_{sp}$/c (Chloroform, 20 Grad C) = 160 ml/g
Mw (Lichtstreuung) = 1,7 mal $10^6$ g/mol
Umsatz: 99,5 %
40 g des isolierten Polymeren wurden bei 150 Grad C zu 1 000 g Bitumen vom Typ B 200 gegeben. Nach 1-stündigem Rühren im Rundkolben mit Säbelrührer bei 150 Grad C war das Polymethacrylat vollständig gelöst. Das erhaltene polymermodifizierte Bitumen vom Typ PmB 80 war homogen, die Oberfläche nach dem Abkühlen glänzend.

Beispiel 2

Herstellung eines Polyisodecylmethacrylates

255 g Isodecylmethacrylat und 45 g p-Xylol wurde in einem 1 l-Vierhalskolben vorgelegt und auf 65 Grad C erwärmt. Dann wurde durch Einleiten von $N_2$ entgast und 0,51 g t-Butylperpivalat wurden zugegeben. Nach 1 Stunde wurde mit 45 g Xylol verdünnt, nach weiteren 4 Stunden wurden 0,51 g t-Butylperpivalat und 0,26 g Dodecylmercaptan zugegeben. Nach insgesamt 14 Stunden war die Polymerisation beendet. Durch Eingießen in Enthanol wurde das Polymethacrylat gefällt und anschließend getrocknet.
$\eta_{sp}$/c (Chloroform, 20 Grad C) = 120 ml/g

Mw (Lichtstreuung) = 1,05 mal $10^6$ g/mol
Umsatz: 97,6 %

40 g des isolierten Polymethacrylates wurden wie in Beispiel 1 beschrieben in 1 000 g B 200 gelöst. Wie in Beispiel 1 wurde ein homogenes polymermodifiziertes Bitumen vom Typ PmB 80 erhalten.

Beispiel 3

Herstellung eines Poly($C_{12}$-$C_{15}$)methacrylates

206,4 g eines $C_{12-15}$-Methacrylates (8 Gew.-% n-$C_{12}$, 13,2 Gew.-% n-$C_{13}$, 12,0 Gew.-% n-$C_{14}$; 6,8 Gew.-% n-$C_{15}$ und 60 Gew.-% iso-$C_{12-15}$), 3,6 g Methylmethacrylat und 90 g n-Octan wurden auf 85 Grad C erhitzt. 1 Stunde lang wurde $N_2$ eingeleitet, dann wurden 0,42 g t-Butylperoctoat zugegeben. Nach 4 Stunden wurden erneut 0,42 g t-Butylperoctoat zugesetzt. Die Gesamtpolymerisationsdauer betrug 16 Stunden. Durch Eingießen der Octanlösung in Ethanol wurde das Polymere isoliert und anschließend getrocknet.

$\eta_{sp}$/c (Chloroform, 20 Grad C) = 120 ml/g
Mw (Lichtstreuung) : 1,08 mal $10^6$ g/mol
Umsatz: 99,6 %

45 g des isolierten Polymerisates wurden in 55 g eines naphthenbasischen Schmieröls mit einer Viskosität von 9 mm²/s bei 100 Grad C gelöst.

Die Öllösung wies eine Viskosität von 5 540 mPa s bei 150 Grad C auf. 88,9 g dieser Öllösung wurden bei 150 Grad C zu 1 000 g eines Bitumen B 200 gegeben und durch einstündiges Rühren bei 150 Grad C im Bitumen gelöst. Es wurde ein homogenes polymermodifiziertes Bitumen des Typs PmB 80 erhalten.

Beispiel 4

Herstellung eines Polyisodecylmethacrylates

In einem 4 l-Vierhalskolben mit Rührer, Innenthermometer und Rückflußkühler wurden 350 g Wasser, 4,5 g einer 10 %igen Lösung des Na-Salzes eines $C_{15}$-Paraffinsulfonates in Wasser und 0,13 g Ammoniumperoxodisulfat vorgelegt. Nach Erhitzen auf 80 Grad C wurde innerhalb von 3 Stunden eine Mischung von 600 g Isodecylmethacrylat, 478,2 g Wasser und 90 g 10 %iger Na-$C_{15}$-Paraffinsulfonat-Lösung zugepfropft. Nach Zulaufende wurde weitere 20 Stunden bei 80 Grad C gerührt. Im Abstand von 6,5 Stunden wurden dreimal jeweils 0,09 g Ammoniumperoxodisulfat zugegeben.

Die erhaltene Polymeremulsion hatten eine Viskosität von 660 mPa s. Der Trockengehalt wurde zu 38,5 % bestimmt.

$\eta_{sp}$/c (Chloroform, 20 Grad C ) = 220 ml/g
Mw (Lichtstreuung) = 5,2 mal $10^6$ g/mol

77,9 g der Emulsion wurden zu 1 000 g Bitumen B 80 bei einer Temperatur von 80 Grad C gegeben. Unter Rühren mit einem Säbelrührer wurde langsam auf 150 Grad C erhitzt. Nach 1-stündigem Rühren war das gesamte Wasser verdampft. Ein homogenes polymermodifiziertes Bitumen vom Typ PmB 65 wurde erhalten.

Beispiel 5

Durch Abdestillieren des Wassers, Lösen des Rückstandes in Tetrahydrofuran und Fällen durch Eingießen in Ethanol wurde das Polymethacrylat aus der Emulsion des Beispiels 4 isoliert. 35 g des getrockneten Polymerisates wurden anschließend unter Rühren bei 150 Grad C in 65 g eine naphthenbasischen Schmieröles (Viskosität bei 100 Grad C = 9 mm²/s) gelöst.

85,7 g dieser Lösung wurden 1 000 g Bitumen B 80 zugegeben und darin durch 2-stündiges Rühren bei 150 Grad C gelöst. Es wurde ein homogenes PmB 65 erhalten.

Vergleichsbeispiel 1

Herstellung eines Polyisodecylmethacrylates mit niedrigerem als dem erfindungsgemäßen Molekulargewicht

Mit i-Decylmethacrylat wurde verfahren wie in Beispiel 1 beschrieben. Es wurde jedoch erst nach 2 Stunden mit 28,6 g n-Octan verdünnt und nach einer weiteren Stunde wurden 0,32 g t-Butylperoctoat zugegeben.

Nach 16 Stunden Gesamtpolymerisationsdauer wurde das Polymethacrylat durch Eingießen in Ethanol isoliert und anschließend getrocknet.

$\eta_{sp}/c$ = 90 ml/g

Mw (Lichtstreuung) = 710 000 g/mol

Durch Lösen von 40 g des Polymerisates in 960 g B 200 wurde wie in Beispiel 1 beschrieben ein homogenes polymermodifiziertes Bitumen erhalten.

Vergleichsbeispiel 2

Herstellung eines Polyisodecylmethacrylates mit niedrigerem als dem erfindungsgemäßen Molekulargewicht.

In einem 500 ml-Vierhalskolben wurden 15 g naphthenbasisches Schmieröl (Viskosität bei 100 Grad C = 11,5 mm²/s) und 85 g Isodecylmethacrylat vorgelegt und auf 82 Grad C erwärmt. Dann wurde 1/2 Stunde lang $N_2$ eingeleitet und 0,17 g t-Butylperoctoat wurden zugegeben.

Eine Mischungen von 45 g naphthenbasischem Öl, 255 g Isodecylmethacrylat und 0,5 g t-Butylperoctoat wurde innerhalb von 3 Stunden mittels einer Dosierpumpe zudosiert. 20 Minuten nach Zulaufende wurde mit 280 g naphthenbasischem Öl verdünnt, nach weiteren 100 MInuten wurden erneut 0,5 g t-Butylperoctoat zugesetzt. Nach 16 Sunden war die Polymerisation beendet. Die Viskosität der Lösung betrug 4 560 mPa s bei 150 Grad C.

$\eta_{sp}/c$ (Chloroform, 20 Grad C) = 88 ml/g

Mw (Lichtstreuung) = 695 000 g/mol

80 g der Lösung des Polymethacrylates wurden bei 150 Grad C in 1 000 g Bitumen B 200 gelöst.

Vergleichsbeispiel 3

Herstellung eines Polyisodecylmethacrylates mit niedrigerem als dem erfindungsgemäßen Molekulargewicht.

Analog Beispiel 1 wurden 222 g Isodecylmethacrylat, 3 g Methylmethacrylat und 275 g n-Octan vorgelegt, auf 85 Grad C erhitzt und durch Zugabe von $CO_2$-Eis entgast. Dann wurden 0,45 g t-Butylpleroctoat zugesetzt. Nach 3 Stunden wurden erneut 0,45 g t-Butylperoctoat zugegeben. Die Gesamtpolymerisationszeit betrug 16 Stunden. Durch Eingießen in Ethanol wurde das Polymerisat isoliert und anschließend getrocknet.

$\eta_{sp}/c$ (Chloroform, 20 Grad C) = 55 ml/g

Mw (Lichtstreuung) = 340 000 g/mol

60 g des isolierten Polymethacrylats wurden durch einstündiges Rühren bei 150 Grad C in 1 000 g Bitumen B 80 gelöst.

TABELLE 1

| | n sp/c des Poly-meren | EP °C | Pene 0,1 mm | Brechpunkt °C | Duktilität (cm) 25 °C | 13 °C | 7 °C | Elastische Rückstellung |
|---|---|---|---|---|---|---|---|---|
| Beispiel 1 | 160 | 45 | 145 | -30 | | > 100 | > 100 | 70 % |
| Beispiel 2 | 120 | 45 | 141 | -25 | | | > 100 | 49-51 % |
| Beispiel 3 | 120 | 39 | 220 | -35 | | | > 100 | 50-55 % |
| Beispiel 4 | 220 | 50 | 81 | -17 | > 100 | | | 50 % |
| Beispiel 5 | 220 | 44 | 141 | -20 | > 100 | | | 60 % |
| Vergleichs-beispiel 1 | 90 | 43 | 132 | -29 | | | > 100 | 25 % |
| Vergleichs-beispiel 2 | 88 | 47 | 105 | -27 | > 100 | | | 35 % |
| Vergleichs-beispiel 3 | 55 | 51 | 74 | -17 | > 100 | | | 11 % |
| B 200 | | 39 | 190 | -18 | > 100 | | | 0 % |
| B 80 | | 49 | 88 | -16 | > 100 | | | 1 % |

EP = Erweichungspunkt, Ring und Kugel, DIN 52011    Brechpunkt nach Fraas, DIN 52012

Pene = Nadelpenetration, DIN 52010    Duktilität, DIN 52013

**Patentansprüche**

1. Polymermodifiziertes Bitumen mit verbesserter elastischer Rückstellung durch einen Gehalt von 0,5 bis 20 Gew.-% an Polymerbestandteilen,
   dadurch gekennzeichnet,
   daß der gegebenenfalls aus verschiedenen Polymerisaten bestehende Polymerzusatz ein Homo- bzw Copolymer ist, das in Mengen von 20 bis 100 Gew.-% aus einem Polyalkyl(meth)acrylat besteht, das in Anteilen von 50 bis 100 Gew.-% aus $C_8$- bis $C_{26}$-Alkyl(meth)acrylaten, in Mengen von 0 bis 30 Gew.-% aus $C_1$- bis $C_7$-Alkyl(meth)acrylaten und in Mengen von 0 bis 20 Gew.-% aus weiteren Monomeren aufgebaut ist und ein Molekulargewicht Mw > $10^6$, entsprechend einer Viskositätszahl $\eta_{sp/c}$ > 120 ml/g, gemessen in Chloroform bei 20 Grad C, hat.

2. Polymermodifiziertes Bitumen nach Anspruch 1, dadurch gekennzeichnet, daß das Polyalkyl(meth)acrylat in Anteilen von 50 bis 100 Gew.-% aus $C_8$- bis $C_{18}$-Alkyl(meth)acrylaten aufgebaut ist.

3. Polymermodifiziertes Bitumen nach den Ansprüchen 1 und 2, dadurch gekennzeichnet, daß der Polymerzusatz ausschließlich Polyalkyl(meth)acrylat ist.

4. Polymermodifiziertes Bitumen nach den Ansprüchen 1 bis 3, dadurch gekennzeichnet, daß die elastische Rückstellung mindestens 50 % beträgt.

5. Polymermodifiziertes Bitumen nach den Ansprüchen 1 bis 4, dadurch gekennzeichnet, daß die weiteren Monomere funktionelle Gruppen enthalten.

**Claims**

1. A polymer-modified bitumen with an improved elastic recovery as a result of it consisting of 0.5 to 20 wt.% of polymer components, characterised in that the polymer additive optionally consisting of various polymers is a homo- or copolymer which consists, in amounts of 20 to 100 wt.%, of a polyalkyl(meth)acrylate which is synthesised, in parts of 50 to 100 wt.%, of $C_8$- to $C_{26}$-alkyl(meth)acrylates, in amounts of 0 to 30 wt.%, of $C_1$- to $C_7$-alkyl(meth)acrylates, and, in amounts of 0 to 20 wt.%, of further monomers, and has a molecular weight of Mw > $10^6$ corresponding to a viscosity number $\eta$sp/c 120 ml/g, measured in chloroform at 20°C.

2. A polymer-modified bitumen according to claim 1, characterised in that the polyalkyl(meth)acrylate is synthesised, in parts of 50 to 100 wt.%, of $C_8$- to $C_{18}$-alkyl(meth)acrylates.

3. A polymer-modified bitumen according to claims 1 and 2, characterised in that the polymer additive consists exclusively of polyalkyl(meth)acrylate.

4. A polymer-modified bitumen according to claims 1 to 3, characterised in that the elastic recovery is at least 50%.

5. A polymer-modified bitumen according to claims 1 to 4, characterised in that the further monomers contain functional groups.

**Revendications**

1. Bitume modifié par des polymères, présentant une reprise élastique améliorée grâce à la présence de 0,5 à 20 % en poids de constituants polymères, caractérisé en ce que l'additif polymère, constitué éventuellement de polymères différents, est un homopolymère ou un copolymère, lequel est constitué à raison de 20 à 100 % en poids d'un poly((méth)acrylate d'alkyle), lequel est constitué de (méth)acrylates d'alkyle en $C_8$ à $C_{26}$ en des quantités de 50 à 100 % en poids, de (méth)acrylates d'alkyle en $C_1$ à $C_7$ en des quantités de 0 à 30 % en poids et d'autres monomères en des quantités de 0 à 20 % en poids, et possède une masse moléculaire Mw > $10^6$, ce qui correspond à un indice de viscosité $n_{sp/c}$ >120 ml/g, mesuré dans le chloroforme à 20°C.

2. Bitume modifié par des polymères selon la revendication 1, caractérisé en ce que le poly((méth)acrylate d'alkyle) est constitué de (méth)acrylates d'alkyle en $C_8$ à $C_{18}$ en des quantités de 50 à 100 % en poids.

3. Bitume modifié par des polymères selon les revendications 1 et 2, caractérisé en ce que l'additif polymère est constitué exclusivement de poly((méth)acrylate d'alkyle).

4. Bitume modifié par des polymères selon les revendications 1 à 3, caractérisé en ce que la reprise élastique est d'au moins 50 %.

5. Bitume modifié par des polymères selon les revendications 1 à 4, caractérisé en ce que les autres monomères contiennent des groupes fonctionnels.